# EUROPEAN PATENT SPECIFICATION

(11) **EP 3 562 024 B1**
(45) Date of publication and mention of the grant of the patent: **04.01.2023**
(21) Application number: 19169685.5
(22) Date of filing: 16.04.2019
(51) Int. Cl.: H02M 7/487, H02M 1/32, H02M 7/483

(54) **AUTO ADJUSTING BALANCER APPARATUS**
AUTOMATISCHE EINSTELLUNG EINER AUSGLEICHSVORRICHTUNG
APPAREIL D'ÉQUILIBRAGE À RÉGLAGE AUTOMATIQUE

(30) Priority: 23.04.2018 US 201815959659
(43) Date of publication of application: 30.10.2019
(73) Proprietor: Eaton Intelligent Power Limited, Dublin 4 (IE)
(72) Inventor: OUGHTON, George William, Raleigh, North Carolina 27614 (US)
(74) Representative: Novagraaf Group

(56) References cited:
- EP-A1- 2 760 115
- WO-A1-2007/105712
- JP-A- 2002 142 371
- JP-A- 2008 005 630
- US-B1- 6 633 091
- ANNO TASUKU ET AL: "Double-Input Bidirectional DC/DC Converter Using Cell-Voltage Equalizer With Flyback Transformer", IEEE TRANSACTIONS ON POWER ELECTRONICS, INSTITUTE OF ELECTRICAL AND ELECTRONICS ENGINEERS, USA, vol. 30, no. 6, 1 June 2015 (2015-06-01), pages 2923-2934, XP011570260, ISSN: 0885-8993, DOI: 10.1109/TPEL.2014.2316201 [retrieved on 2015-01-16]

## Description

### BACKGROUND

The inventive subject matter relates to electrical apparatus and, more particularly, to power converter apparatus.

Power converter apparatus, such as uninterruptible power supply (UPS) systems, grid-tie inverters, and the like, commonly include an inverter that receives power from a DC link. The inverter may produce a single or three phase output that is referenced to a neutral, and the DC link may include first and second buses that have respective positive and negative voltages with respect to the neutral.

Unbalanced loads may cause DC bus imbalance problems in three phase inverter systems. In particular, loading one phase of the inverter output more substantially than the other phases may result in an imbalance in the voltages on the positive and negative DC buses of the DC link with respect to a neutral of the inverter. Such problems may be addressed through the use of a "balancer" circuit that intermittently couples the DC buses to the neutral, as described, for example, in U.S. Patent No. 6,483,730 to Johnson, Jr. et al. Such conventional balancer circuits may, however, generate undesirable ripple currents, even when the load is not unbalanced.

EP 2 760 115 A1 relates to a circuit arrangement for providing an intermediate circuit voltage in a direct voltage intermediate circuit, having two electrical guide elements, between which the intermediate circuit voltage is present, at least two capacitors acting as one the series circuit connecting the guide elements, which are connected, so that their capacitor voltages add up to the intermediate circuit voltage, and a balancing circuit for matching the capacitor voltages, wherein the balancing circuit has at least two coils, each of which has a coil connection with a connection of one of the capacitors and one other coil connection which is connected to another connection of the same capacitor. Further, JP 2008 005 630 A relates to a voltage balance circuit of a serial cell having a plurality of rechargeable cells connected in series, which are connected to a plurality of transformer wound around the same core by the same number of turns, in a one-to-one correspondence via switches for performing on/off operation in linking each other, thus equalizing the voltage of each cell, at transition where the switches are switched from on to off, a self-induced current generated in a coil to which a primary current is supplied from the rechargeable cell is discharged through a route for charging the cell that is separate from the cell connected to a coil. JP 2002 142 371 A relates to a voltage equalizer provided with a transformer, including at least a plurality of power storage means a respective plurality of equalization windings which are magnetically coupled with one another and switching means that are series connected with the windings and are switched, in synchronization with the windings.

### SUMMARY

In accordance with the present invention, an apparatus as set forth in claim 1 is provided. Further embodiments are inter alia disclosed in the dependent claims. The apparatus comprises: first, second, third and fourth serially-connected energy storage devices; first, second, third and fourth serially-connected windings; a first switch configured to connect a first tap of the first winding to a first terminal of the first energy storage device; a second switch configured to connect a second tap of the first winding and a first tap of the second winding to a second terminal of the first energy storage device and a first terminal of the second energy storage device, wherein a second tap of the second winding and a first tap of the third winding are connected to a second terminal of the second energy storage device and a first terminal of the third energy storage device, wherein the second switch is a bidirectional switch; a third switch configured to connect a second tap of the third winding and a first tap of the fourth winding to a second terminal of the third energy storage device and a first terminal of the fourth energy storage device, wherein the third switch is a bidirectional switch; a fourth switch configured to connect a second tap of the fourth winding to a second terminal of the fourth energy storage device; a first diode connected between the first terminal of the first energy storage device and the second terminal of the fourth winding wherein the anode of the first diode is connected to the second terminal of the fourth winding and the cathode of the first diode is connected to the first terminal of the first energy storage device; and a second diode connected between second terminal of the fourth energy storage device and the first terminal of the first winding and wherein the anode of the second diode is connected to the second terminal of the fourth energy storage device and the cathode of the second diode is connected to the first terminal of the first winding; and a control circuit configured to operate the first, second, third and fourth switches at a same duty cycle; wherein the first and second windings are magnetically coupled to one another and wherein the third and fourth windings are magnetically coupled to one another.

In some embodiments, the first and second windings may be wound on a first core and the third and fourth windings may be wound on a second core. A turns ratio of the first winding to the second winding may be 1:1 and wherein a turns ratio of the third winding to the fourth winding may be 1:1.

In further embodiments, the first, second, third and fourth windings may be magnetically coupled to one another. The first, second, third and fourth windings may be wound on a common core. A turns ratio of the first, second, third and fourth windings to one another may be 1:1.

In some embodiments, the duty cycle may be about 50%. In some embodiments, the duty cycle may be less than 40%.

The first, second, third and fourth energy storage devices may include capacitors or batteries. The apparatus may include a multilevel inverter circuit coupled to the terminals of the first, second, third and fourth energy storage devices.

Additional embodiments may provide an apparatus of the above type including a string of serially-connected energy storage devices, a string of serially-connected windings on at least one core and having a first medial node coupled to a first medial node of the string of serially-connected energy storage devices, and first and second switches configured to connect first and second end nodes of the string of serially-connected storage devices to respective first and second end nodes of the string of serially-connected energy storage devices. A control circuit is configured to operate the first and second switches at the same duty cycle.

### BRIEF DESCRIPTION OF THE DRAWINGS

FIG. 1 is a schematic diagram illustrating a bus balancer apparatus according to some embodiments.
FIG. 2 is a waveform diagram illustrating operations of the apparatus of FIG. 1.
FIG. 3 is a schematic diagram illustrating a bus balancer apparatus using IGBT switching devices according to some embodiments.
FIG. 4 is a schematic diagram illustrating a bus balancer apparatus according to further embodiments.
FIG. 5 is a schematic diagram illustrating a bus balancer apparatus for a battery string according to some embodiments.
FIG. 6 is a schematic diagram illustrating use of a bus balancer apparatus with a 5-level inverter according to some embodiments.
FIG. 7 is a schematic diagram illustrating use of a bus balancer apparatus with a 7-level inverter according to some embodiments.
FIG. 8 is a schematic diagram illustrating an interleaved bus balancer apparatus according to some embodiments.
FIG. 9 is a waveform diagram illustrating operations of the apparatus of FIG. 8.

### DETAILED DESCRIPTION

Specific exemplary embodiments of the inventive subject matter now will be described with reference to the accompanying drawings. This inventive subject matter may, however, be embodied in many different forms and should not be construed as limited to the embodiments set forth herein; rather, these embodiments are provided so that this disclosure will be thorough and complete, and will fully convey the scope of the inventive subject matter to those skilled in the art. In the drawings, like numbers refer to like items. It will be understood that when an item is referred to as being "connected" or "coupled" to another item, it can be directly connected or coupled to the other item or intervening items may be present. As used herein the term "and/or" includes any and all combinations of one or more of the associated listed items.

The terminology used herein is for the purpose of describing particular embodiments only and is not intended to be limiting of the inventive subject matter. As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, items, and/or components, but do not preclude the presence or addition of one or more other features, integers, steps, operations, items, components, and/or groups thereof.

Unless otherwise defined, all terms (including technical and scientific terms) used herein have the same meaning as commonly understood by one of ordinary skill in the art to which this inventive subject matter belongs. It will be further understood that terms, such as those defined in commonly used dictionaries, should be interpreted as having a meaning that is consistent with their meaning in the context of the specification and the relevant art and will not be interpreted in an idealized or overly formal sense unless expressly so defined herein.

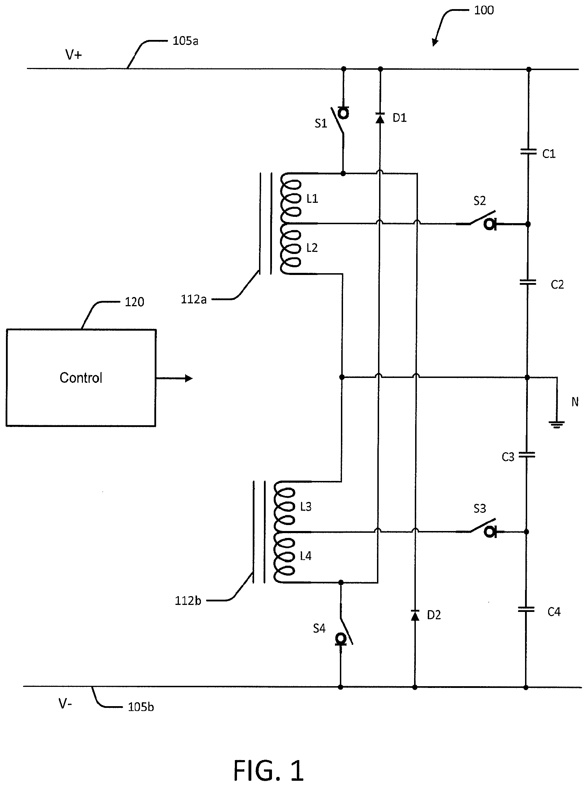

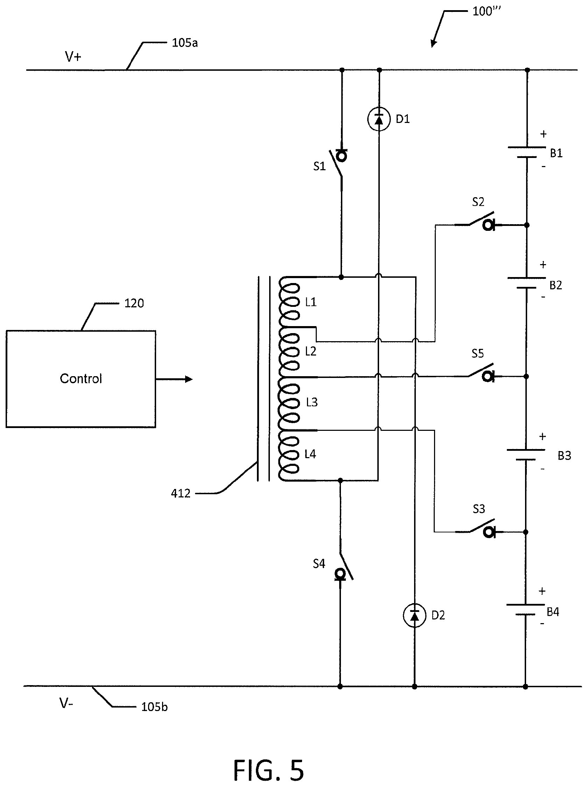

FIG. 1 illustrates a bus balancer apparatus 100 according to some embodiments of the inventive subject matter. The apparatus 100 is configured to balance voltages across four capacitors C1, C2, C3, C4 that are serially connected between first and second DC buses 105a, 105b. The apparatus 100 includes four series-connected windings L1, L2, L3, L4, here shown as wound in pairs on two cores 112a, 112b. A first switch S1 is configured to couple a first terminal of the first winding L1 to the first DC bus 105a. A second switch S2 is configured to connect a second terminal of the first winding L1 and a first terminal of the second winding L2 to a medial node of the string of capacitors C1,C2, C3, C4 at which the first and second capacitors C1, C2 are connected. A second terminal of the second winding L2 and a first terminal of the third winding L3 are connected to a medial neutral node N at which the second and third capacitors C2, C3 are connected. In some embodiments, this node may not be tied to a neutral and the second terminal of the second winding L2 and the first terminal of the third winding could be coupled to this node via another switch (see, *e.g.,* FIG. 5). A third switch S3 is configured to connect a second terminal of the third winding L3 and a first terminal of the fourth winding L4 to a medial node of the string of capacitors C1, C2, C3, C4 at which the third and fourth capacitors C3, C4 are connected. A fourth switch S4 is configured to connect a second terminal of the fourth winding L4 to the second DC bus 105b. A first diode D1 is connected between the second terminal of the fourth winding L4 and the first DC bus 105a, and a second diode D2 is connected between the first terminal of the first winding L1 and the second DC bus 105b.

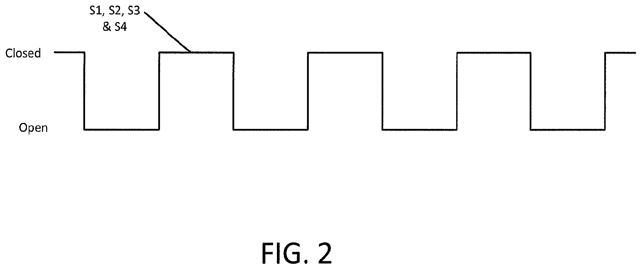

The windings L1, L2, L3, L4 preferably have an approximately 1:1 turns ratio, which is used to equalize voltages across the capacitors C1, C2, C3, C4. In some embodiments, a control circuit 120 controls the first, second, third and fourth switches S1, S2, S3, S4 such that the first, second, third and fourth switches S1,S2, S2, S3, S4 operate at the substantially the same duty cycle. More particularly, when the first, second, third and fourth switches S1, S2, S3, S4 are turned on, the 1:1 turns ratio of the first, second, third and fourth windings L1, L2, L3, L4 drives the magnitudes of the voltages across the capacitors C1, C2, C3, C4 toward equilibrium. The first, second, third and fourth switches S1, S2, S3, S4 are then turned off to initiate discharge of the first, second, third and fourth windings L1, L2, L3, L4 via the first and second diodes D1, D2 (which could be replaced by active switching devices that perform a similar function) and allow the flux in the magnetic cores 112a, 112b to fall to zero before the first, second, third and fourth switches S1, S2, S3, S4 are again turned on. In some embodiments, the first, second, third and fourth switches S1, S2, S3, S4 may be operated at a duty cycle preferably slightly less than 50%, as shown in FIG. 2. In some embodiments, the duty cycle can be less than shown in FIG. 2, although a significantly reduced duty cycle may lead to less desirable performance (e.g., increased ripple currents).

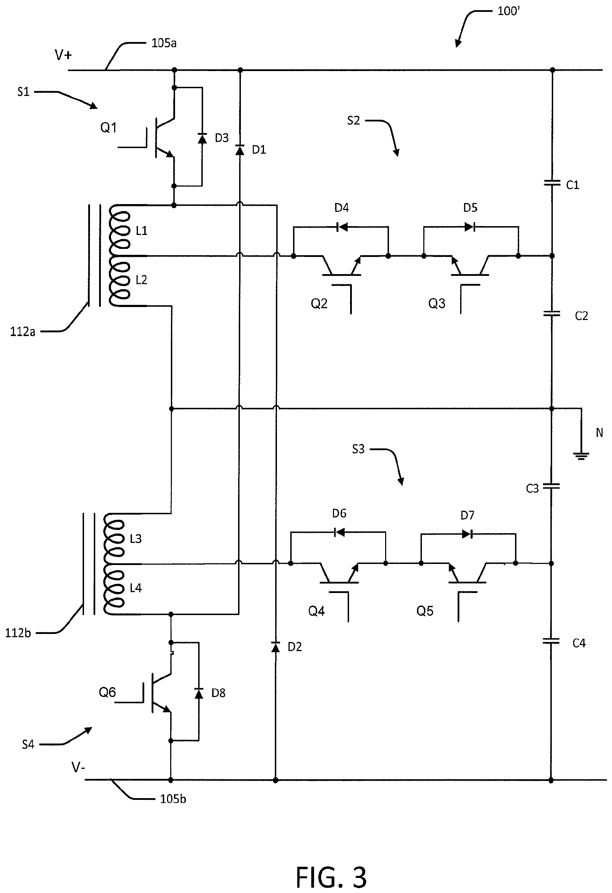

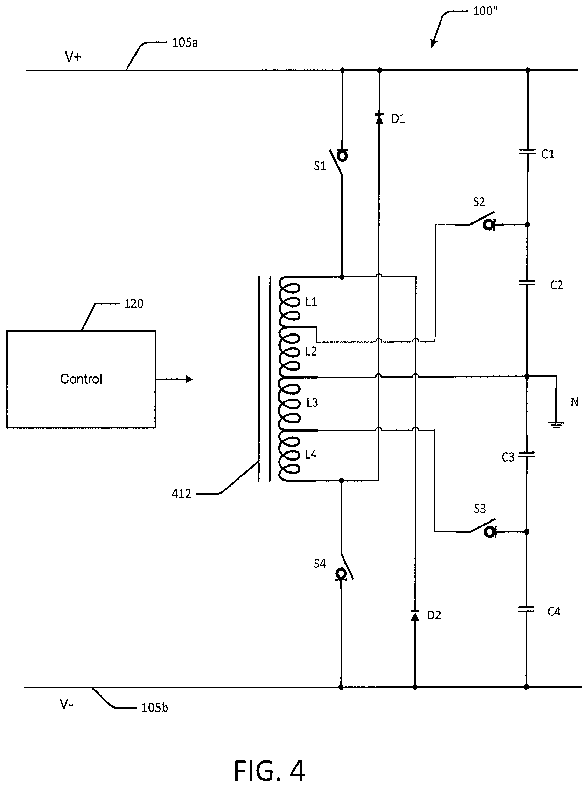

It will be understood that the apparatus 100 may be implemented using any of a number of different types of components. In some embodiments, for example, the first, second, third and fourth S1, S2, S3, S4 may be implemented using transistors, such as insulated gate bipolar transistors (IGBTs) or power MOSFETs, or other types of semiconductor switches. Referring to FIG. 3, in an apparatus 100', the first and fourth switches S1, S4 may be bidirectional switches formed using IGBTs Q1, Q6 with respective diodes D3, D8. MOSFETs can be similarly used, but can have intrinsic body diodes that can eliminate the need for separate diodes. The second and third switches S2, S3 may be bidirectional switches formed from series-connected IGBTs Q2, Q3, Q4, Q5 with respective diodes D4, D5, D6, D7. According to further embodiments, instead of the two-core arrangement illustrated in FIG. 1, a bus balancer apparatus 100" according to further embodiments may include windings L1, L2, L3, L4 wound on a single common core 412, as shown in FIG. 4.

The control circuit 120 of FIGs. 1, 3 and 4 may be implemented using any of variety of different analog and/or digital circuit components. For example, the control circuit 120 may be implemented using a data processing device, such as a microcontroller, along with peripheral circuitry configured to drive the first, second, third and fourth switches S1, S2, S3, S4. In some embodiments, the first, second, third and fourth switches S1, S2, S3, S4 may be controlled using analog and/or discrete digital circuitry that provides similar functionality.

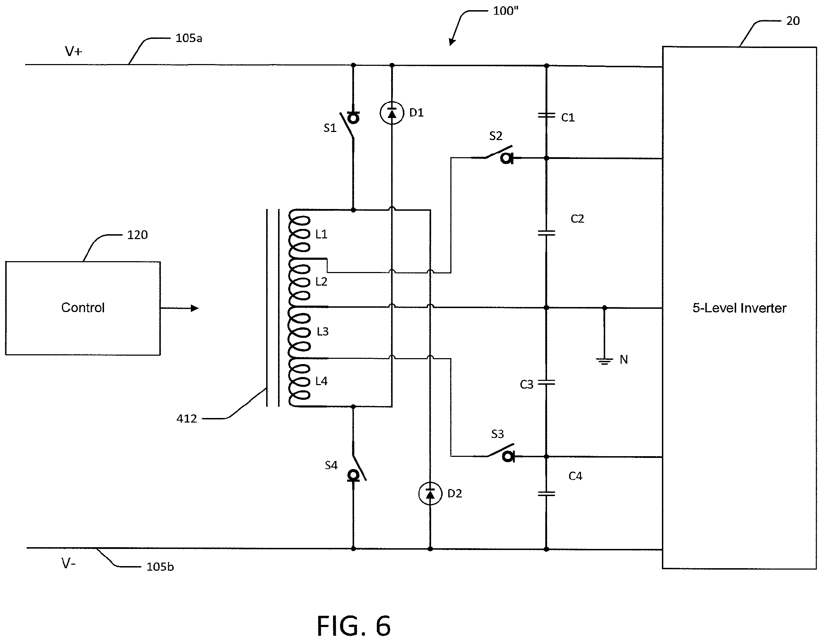

According to further embodiments, bus balancer apparatus along the lines discussed above may be used to balance voltages across other types of devices, such as serially-connected batteries or other energy storage devices. For example, FIG. 5 illustrates the use of the bus balancer apparatus 100ʺʺ similar to the balancer apparatus 100" of FIG. 4, except for the removal of the neutral connection and addition of a switch S5, which may be used to balance voltages across batteries in a string of serially-connected batteries B1, B2, B3, B4. The switches S1, S2, S3, S4, S5 may be operated at a common near 50% duty cycle along lines discussed above. Such an arrangement may be particularly advantageous in, for example, lithium-ion battery systems, in which maintaining equilibrium among cells in a battery string may be important in preventing thermal runaway. Further applications of balancer apparatus include balancing of capacitors for multi-level converters. For example, FIG. 6 illustrates the use of the balancer apparatus 100" of FIG. 4 in conjunction with a 5-level inverter 20.

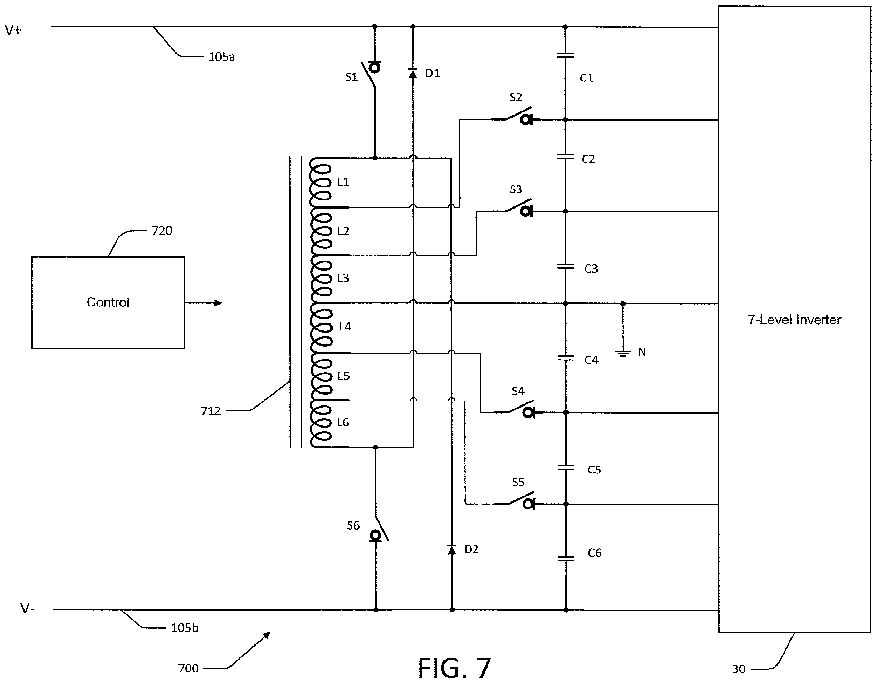

Balancer apparatus according to some embodiments of the inventive subject matter are also scalable for strings having larger numbers of energy storage devices. For example, FIG. 7 illustrates a balancer apparatus 700 configured to balance voltages across six capacitors C1, C2, C3, C4, C5, C6 that are serially connected between first and second DC buses 105a, 105b that feed a 7-level inverter 30. The apparatus 700 includes six series-connected windings L1, L2, L3, L4, L5, L6 wound on a common core 712. A first switch S1 is configured to couple a first terminal of the first winding L1 to the first DC bus 105a. A second switch S2 is configured to connect a second terminal of the first winding L1 and a first terminal of the second winding L2 to a medial node of the string of capacitors C1, C2, C3, C4, C5, C6 at which the first and second capacitors C1, C2 are connected. A third switch S3 is configured to couple a second terminal of the second winding L2 to a medial node of the string of capacitors C1, C2, C3, C4, C5, C6 at which the second and third capacitors C2, C3 are connected. A second terminal of the third winding L3 and a first terminal of the fourth winding L4 are connected to a neutral node N at which the third and fourth capacitors C3, C4 are connected. A fourth switch S4 is configured to connect a second terminal of the fourth winding L4 and a first terminal of the fifth winding L5 to a medial node of the string of capacitors C1, C2, C3, C4, C5, C6 at which the fourth and fifth capacitors C4, C5 are connected. A fifth switch S5 is configured to connect a second terminal of the fifth winding L5 and a first terminal of the sixth winding L6 to a medial node of the string of capacitors C1, C2, C3, C4, C5, C6 at which the fifth and sixth capacitors C5, C6 are connected. A sixth switch S6 is configured to connect a second terminal of the sixth winding L6 to the second DC bus 105b. A first diode D1 is connected between the second terminal of the sixth winding L6 and the first DC bus 105a, and a second diode D2 is coupled between the first terminal of the first winding L1 and the second DC bus 105b.

The windings L1, L2, L3, L4, L5, L6 have an approximately 1:1 turns ratio and a control circuit 720 controls the first, second, third, fourth, fifth and sixth switches S1, S2, S3, S4, S5, S6 such that the first, second, third, fourth, fifth and sixth switches S1, S2, S2, S3, S4, S5, S6 operate at the substantially the same duty cycle. In some embodiments, the first, second, third, fourth, fifth and sixth switches S1, S2, S3, S4, S5, S6 may be operated at a duty cycle of around 50%. It will be appreciated that this arrangement can be expanded to strings with even greater numbers of energy storage devices (e.g., capacitors, batteries, supercapacitors) using additional windings and switches. Although the embodiments described above are used to balance voltages for strings having an even number of energy storage devices, further embodiments may similarly use an odd numbers of winding to balance strings with a corresponding odd number of serially-connected energy storage devices.

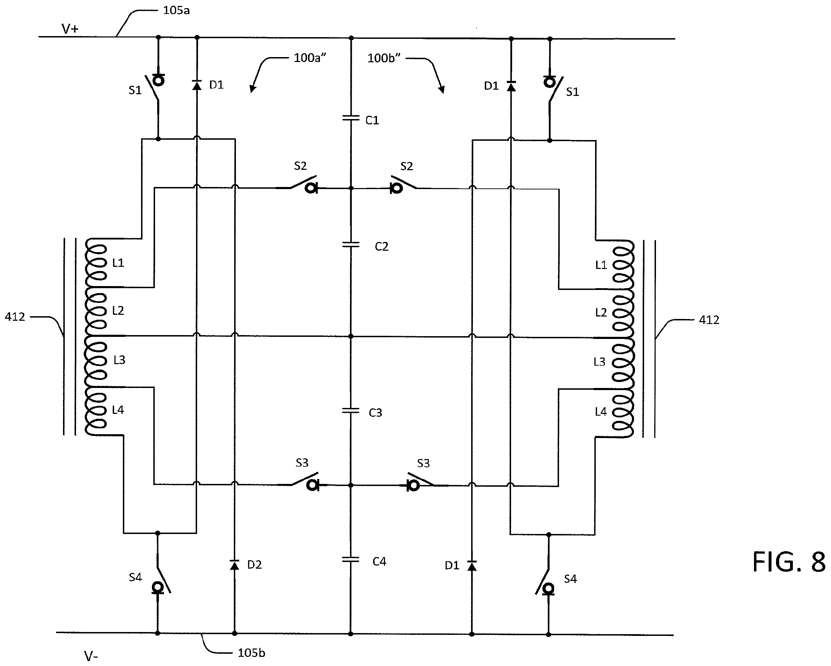

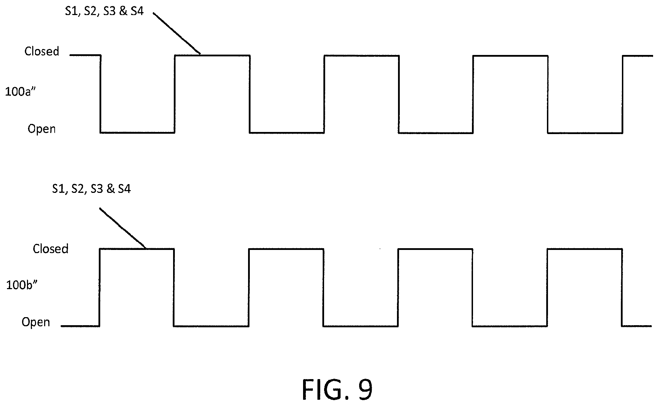

According to additional aspects, multiple balancer apparatus along the lines described above operating in an interleaved fashion may be used to provide improved performance. Referring to FIG. 8, first and second balancer apparatus 100a", 100b" similar to the balancer apparatus 100" of FIG. 4 are provided. As shown in FIG. 9, the switches S1, S2, S3, S4 of the first and second balancer apparatus 100a", 100b" are operated at around a 50% duty cycle and in a complementary fashion such that the switches S1, S2, S3, S4 of the first balancer apparatus 100a" are "off" when the switches S1, S2, S3, S4 of the second balancer apparatus 100b" are "on," and the switches S1, S2, S3, S4 of the second balancer apparatus 100b" are "off" when the switches S1, S2, S3, S4 of the first balancer apparatus 100a" are "on." This enables balancing to occur on a substantially continuous basis.

In the drawings and specification, there have been disclosed exemplary embodiments of the inventive subject matter. Although specific terms are employed, they are used in a generic and descriptive sense only and not for purposes of limitation, the scope of the inventive subject matter being defined by the following claims.

## Claims

1. An apparatus comprising:
first (C1; B1), second (C2; B2), third (C3; B3) and fourth (C4; B4) serially-connected energy storage devices;
first (L1), second (L2), third (L3) and fourth (L4) serially-connected windings;
a first switch (S1) configured to connect a first tap of the first winding (L1) to a first terminal of the first energy storage device (C1; B1);
a second switch (S2) configured to connect a second tap of the first winding (L1) and a first tap of the second winding (L2) to a second terminal of the first energy storage device (C1; B1) and a first terminal of the second energy storage device (C2; B2), wherein a second tap of the second winding (L2) and a first tap of the third winding (L3) are connected to a second terminal of the second energy storage device (C2; B2) and a first terminal of the third energy storage device (C3; B3), wherein the second switch (S2) is a bidirectional switch;
a third switch (S3) configured to connect a second tap of the third winding (L3) and a first tap of the fourth winding (L4) to a second terminal of the third energy storage device (C3; B3) and a first terminal of the fourth energy storage device (C4; B4), wherein the third switch (S3) is a bidirectional switch;
a fourth switch (S4) configured to connect a second tap of the fourth winding (L4) to a second terminal of the fourth energy storage device (C4; B4);
a first diode (D1) connected between the first terminal of the first energy storage device (C1; B1) and the second terminal of the fourth winding (L4) wherein the anode of the first diode (D1) is connected to the second terminal of the fourth winding (L4) and the cathode of the first diode (D1) is connected to the first terminal of the first energy storage device (C1; B1); and
a second diode (D2) connected between second terminal of the fourth energy storage device (C4; B4) and the first terminal of the first winding (L1) and wherein the anode of the second diode (D2) is connected to the second terminal of the fourth energy storage device (C4; B4) and the cathode of the second diode (D2) is connected to the first terminal of the first winding (L1); and
a control circuit (120) configured to operate the first (S1), second (S2), third (S3) and fourth (S4) switches at a same duty cycle;
wherein the first (L1) and second (L2) windings are magnetically coupled to one another and wherein the third (L3) and fourth windings (L4) are magnetically coupled to one another,
wherein the first (L1) and second (L2) windings are wound on a first core (112a) and wherein the third (L3) and fourth (L4) windings are wound on a second core (112b).

2. The apparatus of claim 1, wherein the first (C1; B1), second (C2; B2), third (C3; B3) and fourth (C4; B4) serially-connected energy storage devices comprises capacitors (C1, C2, C3, C4) or batteries (B1, B2, B3, B4).

3. The apparatus of claim 1, wherein a turns ratio of the first winding (L1) to the second winding (L2) is 1:1 and wherein a turns ratio of the third winding (L3) to the fourth winding (L4) is 1:1.

4. The apparatus of claim 1, wherein the duty cycle is less than 50% and greater than 40%.

5. The apparatus of claim 1, wherein the first (S1), second (S2), third (S3) and fourth (S4) switches are bidirectional switches formed using insulated gate bipolar transistors and diodes.

6. The apparatus of claim 1, wherein the first switch (S1) and the fourth switch (S4) are bidirectional switches formed
using respective insulated gate bipolar transistors (Q1; Q6) with diodes (D3; D8); or
using MOSFETs have intrinsic body diodes.

7. The apparatus of claim 1, wherein the second switch (S2) and the fourth switch (S4) are bidirectional switches formed from respective series-connected insulated gate bipolar transistors (Q2, Q3; Q4, Q5) with diodes (D4, D5; D6, D7).

8. The apparatus of claim 1, further comprising a multilevel inverter circuit (20) coupled to the terminals of the first (C1; B1), second (C2; B2), third (C3; B3) and fourth (C4; B4) energy storage devices.

## Patentansprüche

1. Einrichtung, umfassend:
eine erste (C1; B1), eine zweite (C2; B2), eine dritte (C3; B3) und eine vierte (C4; B4) seriell verbundene Energiespeichervorrichtung;
eine erste (L1), eine zweite (L2), eine dritte (L3) und eine vierte (L4) seriell verbundene Wicklung;
einen ersten Schalter (S1), der dafür konfiguriert ist, um eine erste Anzapfung der ersten Wicklung (L1) mit einem ersten Anschluss der ersten Energiespeichervorrichtung (C1; B1) zu verbinden;
einen zweiten Schalter (S2), der dafür konfiguriert ist, um eine zweite Anzapfung der ersten Wicklung (L1) und eine erste Anzapfung der zweiten Wicklung (L2) mit einem zweiten Anschluss der ersten Energiespeichervorrichtung (C1; B1) und einem ersten Anschluss der zweiten Energiespeichervorrichtung (C2; B2) zu verbinden, wobei eine zweite Anzapfung der zweiten Wicklung (L2) und eine erste Anzapfung der dritten Wicklung (L3) mit einem zweiten Anschluss der zweiten Energiespeichervorrichtung (C2; B2) und einem ersten Anschluss der dritten Energiespeichervorrichtung (C3; B3) verbunden sind, wobei der zweite Schalter (S2) ein bidirektionaler Schalter ist;
einen dritten Schalter (S3), der dafür konfiguriert ist, um eine zweite Anzapfung der dritten Wicklung (L3) und eine erste Anzapfung der vierten Wicklung (L4) mit einem zweiten Anschluss der dritten Energiespeichervorrichtung (C3; B3) und einem ersten Anschluss der vierten Energiespeichervorrichtung (C4; B4) zu verbinden, wobei der dritte Schalter (S3) ein bidirektionaler Schalter ist;
einen vierten Schalter (S4), der dafür konfiguriert ist, um eine zweite Anzapfung der vierten Wicklung (L4) mit einem zweiten Anschluss der vierten Energiespeichervorrichtung (C4; B4) zu verbinden;
eine erste Diode (D1), die zwischen dem ersten Anschluss der ersten Energiespeichervorrichtung (C1; B1) und dem zweiten Anschluss der vierten Wicklung (L4) verbunden ist, wobei die Anode der ersten Diode (D1) mit dem zweiten Anschluss der vierten Wicklung (L4) verbunden ist und die Kathode der ersten Diode (D1) mit dem ersten Anschluss der ersten Energiespeichervorrichtung (C1; B1) verbunden ist; und
eine zweite Diode (D2), die zwischen dem zweiten Anschluss der vierten Energiespeichervorrichtung (C4; B4) und dem ersten Anschluss der ersten Wicklung (L1) verbunden ist und wobei die Anode der zweiten Diode (D2) mit dem zweiten Anschluss der vierten Energiespeichervorrichtung (C4; B4) verbunden ist und die Kathode der zweiten Diode (D2) mit dem ersten Anschluss der ersten Wicklung (L1) verbunden ist; und
eine Steuerschaltung (120), die dafür konfiguriert ist, um den ersten (S1), den zweiten (S2), den dritten (S3) und den vierten (S4) Schalter in einem gleichen Arbeitszyklus zu betreiben;
wobei die erste (L1) und die zweite (L2) Wicklung magnetisch miteinander gekoppelt sind und wobei die dritte (L3) und die vierte Wicklung (L4) magnetisch miteinander gekoppelt sind,
wobei die erste (L1) und die zweite (L2) Wicklung auf einen ersten Kern (112a) gewickelt sind und wobei die dritte (L3) und die vierte (L4) Wicklung auf einen zweiten Kern (112b) gewickelt sind.

2. Einrichtung nach Anspruch 1, wobei die erste (C1; B1), die zweite (C2; B2), die dritte (C3; B3) und die vierte (C4; B4) seriell verbundene Energiespeichervorrichtung Kondensatoren (C1, C2, C3, C4) oder Batterien (B1, B2, B3, B4) umfassen.

3. Einrichtung nach Anspruch 1, wobei ein Übersetzungsverhältnis der ersten Wicklung (L1) zu der zweiten Wicklung (L2) 1:1 beträgt und wobei ein Übersetzungsverhältnis der dritten Wicklung (L3) zu der vierten Wicklung (L4) 1:1 beträgt.

4. Einrichtung nach Anspruch 1, wobei der Arbeitszyklus weniger als 50 % und mehr als 40 % beträgt.

5. Einrichtung nach Anspruch 1, wobei der erste (S1), der zweite (S2), der dritte (S3) und der vierte (S4) Schalter bidirektionale Schalter sind, die unter Verwendung von Bipolartransistoren und Dioden mit isoliertem Gate gebildet sind.

6. Einrichtung nach Anspruch 1, wobei der erste Schalter (S1) und der vierte Schalter (S4) bidirektionale Schalter sind, die unter Verwendung jeweiliger Bipolartransistoren mit isoliertem Gate (Q1; Q6) mit Dioden (D3; D8); oder unter Verwendung von MOSFETs gebildet sind, die intrinsische Body-Dioden aufweisen.

7. Einrichtung nach Anspruch 1, wobei der zweite Schalter (S2) und der vierte Schalter (S4) bidirektionale Schalter sind, die aus jeweiligen in Reihe geschalteten Bipolartransistoren mit isoliertem Gate (Q2, Q3; Q4, Q5) mit Dioden (D4, D5; D6, D7) gebildet sind.

8. Einrichtung nach Anspruch 1, ferner umfassend eine mehrstufige Wechselrichterschaltung (20), die mit den Anschlüssen der ersten (C1; B1), der zweiten (C2; B2), der dritten (C3; B3) und der vierten (C4; B4) Energiespeichervorrichtung gekoppelt ist.

## Revendications

1. Appareil comprenant :
des premier (C1 ; B1), deuxième (C2 ; B2), troisième (C3 ; B3) et quatrième (C4 ; B4) dispositifs de stockage d'énergie connectés en série ;
des premier (L1), deuxième (L2), troisième (L3) et quatrième (L4) enroulements connectés en série ;
un premier commutateur (S1) configuré pour connecter une première prise du premier enroulement (L1) à une première borne du premier dispositif de stockage d'énergie (C1 ; B1) ;
un deuxième commutateur (S2) configuré pour connecter une deuxième prise du premier enroulement (L1) et une première prise du deuxième enroulement (L2) à une deuxième borne du premier dispositif de stockage d'énergie (C1 ; B1) et une première borne du deuxième dispositif de stockage d'énergie (C2 ; B2), dans lequel une deuxième prise du deuxième enroulement (L2) et une première prise du troisième enroulement (L3) sont connectées à une deuxième borne du deuxième dispositif de stockage d'énergie (C2 ; B2) et une première borne du troisième dispositif de stockage d'énergie (C3 ; B3), dans lequel le deuxième commutateur (S2) est un commutateur bidirectionnel ;
un troisième commutateur (S3) configuré pour connecter une deuxième prise du troisième enroulement (L3) et une première prise du quatrième enroulement (L4) à une deuxième borne du troisième dispositif de stockage d'énergie (C3 ; B3) et une première borne du quatrième dispositif de stockage d'énergie (C4 ; B4), dans lequel le troisième commutateur (S3) est un commutateur bidirectionnel ;
un quatrième commutateur (S4) configuré pour connecter une deuxième prise du quatrième enroulement (L4) à une deuxième borne du quatrième dispositif de stockage d'énergie (C4 ; B4) ;
une première diode (D1) connectée entre la première borne du premier dispositif de stockage d'énergie (C1 ; B1) et la deuxième borne du quatrième enroulement (L4) dans lequel l'anode de la première diode (D1) est connectée à la deuxième borne du quatrième enroulement (L4) et la cathode de la première diode (D1) est connectée à la première borne du premier dispositif de stockage d'énergie (C1 ; B1) ; et
une deuxième diode (D2) connectée entre la deuxième borne du quatrième dispositif de stockage d'énergie (C4 ; B4) et la première borne du premier enroulement (L1) et dans lequel l'anode de la deuxième diode (D2) est connectée à la deuxième borne du quatrième dispositif de stockage d'énergie (C4 ; B4) et la cathode de la deuxième diode (D2) est connectée à la première borne du premier enroulement (L1) ; et
un circuit de commande (120) configuré pour faire fonctionner les premier (S1), deuxième (S2), troisième (S3) et quatrième (S4) commutateurs à un même cycle de service ;
dans lequel les premier (L1) et deuxième (L2) enroulements sont couplés magnétiquement l'un à l'autre et dans lequel les troisième (L3) et quatrième enroulements (L4) sont couplés magnétiquement l'un à l'autre,
dans lequel les premier (L1) et deuxième (L2) enroulements sont enroulés sur un premier noyau (112a) et dans lequel les troisième (L3) et quatrième (L4) enroulements sont enroulés sur un deuxième noyau (112b).

2. Appareil selon la revendication 1, dans lequel les premier (C1 ; B1), deuxième (C2 ; B2), troisième (C3 ; B3) et quatrième (C4 ; B4) dispositifs de stockage d'énergie connectés en série comprennent des condensateurs (C1, C2, C3, C4) ou des batteries (B1, B2, B3, B4).

3. Appareil selon la revendication 1, dans lequel un rapport de transformation du premier enroulement (L1) au deuxième enroulement (L2) vaut 1:1 et dans lequel un rapport de transformation du troisième enroulement (L3) au quatrième enroulement (L4) vaut 1:1.

4. Appareil selon la revendication 1, dans lequel le cycle de service est inférieur à 50 % et supérieur à 40 %.

5. Appareil selon la revendication 1, dans lequel les premier (S1), deuxième (S2), troisième (S3) et quatrième (S4) commutateurs sont des commutateurs bidirectionnels formés en utilisant des transistors bipolaires à grille isolée et des diodes.

6. Appareil selon la revendication 1, dans lequel le premier commutateur (S1) et le quatrième commutateur (S4) sont des commutateurs bidirectionnels formés
en utilisant des transistors bipolaires à grille isolée respectifs (Q1 ; Q6) avec des diodes (D3 ; D8) ; ou
en utilisant des MOSFET qui ont des diodes de corps intrinsèques.

7. Appareil selon la revendication 1, dans lequel le deuxième commutateur (S2) et le quatrième commutateur (S4) sont des commutateurs bidirectionnels formés à partir de transistors bipolaires à grille isolée connectés en série respectifs (Q2, Q3 ; Q4, Q5) avec des diodes (D4, D5 ; D6, D7).

8. Appareil selon la revendication 1, comprenant en outre un circuit inverseur multiniveau (20) couplé aux bornes des premier (C1 ; B1), deuxième (C2 ; B2), troisième (C3 ; B3) et quatrième (C4 ; B4) dispositifs de stockage d'énergie.
